# EUROPÄISCHE PATENTSCHRIFT

(11) **EP 2 606 192 B1**
(45) Veröffentlichungstag und Bekanntmachung des Hinweises auf die Patenterteilung: **16.03.2016**
(21) Anmeldenummer: 11730545.8
(22) Anmeldetag: 22.06.2011
(51) Int. Cl.: E04H 6/02

(54) **DACHKONSTRUKTION**
ROOF CONSTRUCTION
STRUCTURE DE TOIT

(30) Priorität: 23.06.2010 AT 10602010
(43) Veröffentlichungstag der Anmeldung: 26.06.2013
(73) Patentinhaber: Secar Technologie GmbH, 8682 Hönigsberg/Mürzzuschlag (AT)
(72) Erfinder: SEMLITSCH, Karl-Heinz, A-8680 Mürzzuschlag (AT)
(74) Vertreter: Wildhack & Jellinek
(86) Internationale Anmeldenummer: PCT/AT2011/000281
(87) Internationale Veröffentlichungsnummer: WO 2011/160155

(56) Entgegenhaltungen:
- BE-A- 443 181
- JP-A- H08 246 693
- US-A1- 2004 065 025

## Beschreibung

Die Erfindung betrifft eine Dachkonstruktion zum Unterstellen von Fahrzeugen gemäß dem Oberbegriff des Patentanspruchs 1.

Aus dem Stand der Technik sind eine Vielzahl von Überdachungen für Fahrzeuge wie Garagen, car-ports, Zelte usw. bekannt.

Aufgabe der Erfindung ist es, eine Dachkonstruktion zu gestalten, die einerseits leicht und flexibel ist, andererseits eine geringe Anfälligkeit gegenüber Wind bietet und die untergestellten Gegenstände, insbesondere Fahrzeuge, vor äußeren Einflüssen, wie Schnee, Regen, Hagel usw., schützt.

Die Erfindung löst diese Aufgabe mit dem kennzeichnenden Merkmal des Patentanspruchs 1.

Dokument BE 443181 offenbart eine Dachkonstruktion mit allen Merkmalen des Oberbegriffs des Anspruchs 1.

Erfindungsgemäß ist bei einer Dachkonstruktion zum Unterstellen und Schutz von Fahrzeugen, Gegenständen vor Witterungseinflüssen wie Regen oder Schnee, umfassend eine Dachfläche und zwei mit dem zu überdachenden Untergrund verbindbare Grundkörper, wobei jeder der beiden Grundkörper über jeweils einer Anzahl von Streben mit der Dachfläche verbunden ist, wobei die Anzahl der mit jeweils einem der Grundkörper verbundenen Streben gemeinsam mit dem jeweiligen Grundkörper jeweils eine seitliche Abgrenzung der Dachkonstruktion bildet, und wobei zwischen den beiden seitlichen Abgrenzungen ein Portal zum Einstellen eines Fahrzeugs ausgebildet ist, vorgesehen, dass die Streben vom jeweiligen Grundkörper speichenförmig zur Dachfläche radial nach außen verlaufend angeordnet sind und dass die Dachfläche einen durch die Anordnung der Enden der Streben vorgegebenen gekrümmten konvexen Verlauf aufweist.

Erfindungsgemäß ergibt sich vorteilhafterweise eine besonders stabile Konstruktion sowie ein äußerst leichter und robuster Aufbau. Die Anfälligkeit gegenüber Wind ist gegenüber herkömmlichen Dachkonstruktionen mit geraden Dächern und vertikalen Streben um ein Vielfaches erhöht. Ferner ist aufgrund der vorteilhaften Führung des Kraftflusses durch die speichenförmig angeordneten Streben auch eine erhöhte Dachlast gewährleistet, sodass Arbeiten an der Oberseite der Dachkonstruktion leichter durchgeführt werden können.

Besondere Stabilität wird dadurch erreicht, dass zur Verbindung der Streben mit der Dachfläche Verbindungselemente vorgesehen sind.
Dabei ist vorgesehen, dass die Verbindungselemente die Form eines Zylinders mit halbkreisförmigem Querschnitt aufweisen, dessen ebener Mantelabschnitt an der Dachfläche anliegt, gegebenenfalls an den gekrümmten Verlauf der Dachfläche angepasst ist, und die Streben an dessen kreiszylinderförmigen Oberflächenabschnitt angreifen.

Vorteilhafterweise kann vorgesehen sein, dass die beiden seitlichen Abgrenzungen identisch aufgebaut sind. Dies vereinfacht die Herstellung der erfindungsgemäßen Dachkonstruktion und verbessert die Stabilität gegenüber Wind.

Weiters kann vorgesehen sein, dass die Dachfläche zwei, insbesondere parallel verlaufende, Seitenkanten aufweist und dass die von jeweils einem der Grundkörpern ausgehenden Streben jeweils im gleichen Abstand zur jeweiligen der Seitenkanten der Dachfläche oder direkt an der Seitenkante der Dachfläche angreifen. Durch diese Maßnahme kann die Dachfläche besonders einfach ausgebildet und mit den Streben verbunden werden.

Weiters kann vorgesehen sein, dass die Streben der beiden seitlichen Abgrenzungen in jeweils derselben Ebene liegen. Dies erhöht die Stabilität der erfindungsgemäßen Dachkonstruktion und vereinfacht den Aufbau.

Eine besondere Weiterbildung der Erfindung sieht vor, dass die Streben geradlinig ausgebildet sind. Dies trägt zur Stabilität der Gesamtkonstruktion bei. Dabei kann weiters vorgesehen sein, dass die Streben einen kreisförmigen Außenquerschnitt aufweisen. Dies erhöht zusätzlich die Stabilität.

Alternativ oder zusätzlich kann vorgesehen sein, dass die Streben rohrförmig ausgebildet sind. Hierdurch wird das Führen von Kabeln oder Fluiden im Inneren der Streben gewährleistet.

Weiters kann vorgesehen sein, dass die Streben von einem Zentralpunkt aus radial nach außen verlaufen. Dies verbessert zusätzlich die Stabilität der Dachkonstruktion und erleichtert die Abführung der auf die Dachfläche wirkenden Kräfte.

Ein weiterer Aspekt der Erfindung sieht vor, dass die durch die Streben der seitlichen Abgrenzungen aufgespannten Ebenen zueinander parallel liegen. Durch diesen Aufbau wird eine gleichmäßige Verteilung der auf die Dachfläche einwirkenden Kräfte auf die beiden Grundkörper erreicht.

Zudem kann vorgesehen sein, dass die Dachfläche konvex nach oben gekrümmt ist. Dies verbessert die Widerstandsfähigkeit gegen Schnee, Hagel, Regen und Wind.

Bevorzugterweise kann vorgesehen sein, dass die Dachfläche zumindest abschnittsweise einen zylindrischen Oberflächenverlauf aufweist. Dies ermöglicht eine gleichmäßige Verteilung der von der Dachfläche aufgenommenen Druckkräfte auf die Streben.

Dies ermöglicht eine besonders gute Kraftübertragung von der Dachfläche auf die Streben und verhindert eine Überbelastung der Streben sowie der Dachkonstruktion im Verbindungsbereich.

Weiters kann vorgesehen sein, dass an der den Streben abgewandten Oberseite der Dachfläche eine Anzahl von Solarkollektoren zur Umwandlung von Sonnenenergie in thermische und/oder elektrische Energie angeordnet ist.

Hierdurch kann die auf der Dachfläche zur Verfügung stehende Fläche zielbringend zur Energiegewinnung eingesetzt werden.

Dabei kann vorgesehen sein, dass in den Streben verlaufende Kabel zur Abfuhr der mit der Solarzellen erzeugten elektrischen Energie vorgesehen sind. Dies hat den Vorteil, dass die Leitungskabel geschont werden und zudem von außen nicht sichtbar sind.

Zusätzlich kann vorgesehen sein, dass in zumindest einem der Verbindungselemente ein Wandler vorgesehen ist, der die mit den Solarkollektoren erzeugte elektrische Energie transformiert, insbesondere Wechselstrom an seinen Ausgang abgibt. Dies ermöglicht einen besonders kompakten Aufbau sowie eine effiziente Energiegewinnung.

Ein besonderer weiterer Aspekt der Erfindung sieht vor, dass die Solarkollektoren von zur Übertragung von thermischer Energie auf ein Wärmeträger-Fluid ausgebildet sind, und dass eine Zuleitung und eine Ableitung vorgesehen sind, über die jeweils Wärmeträger-Fluid in die Solarkollektoren bringbar ist. Dies ermöglicht eine besonders effiziente Übertragung der durch die Solarkollektoren erzeugten Abwärme.

Zur Verbesserung dieses Effekts kann vorgesehen werden, dass die Zuleitung und die Ableitung teilweise durch je eine der Streben gebildet sind, wobei die jeweiligen Streben rohrförmig und fluiddicht ausgebildet sind.

Die Erfindung ist anhand der folgenden Zeichnungen ohne Einschränkung des allgemeinen erfinderischen Gedankens dargestellt.
Fig. 1 zeigt die erfindungsgemäße Dachkonstruktion in Seitenansicht.
Fig. 2 zeigt die erfindungsgemäße Dachkonstruktion mit Blick auf das zwischen den seitlichen Abgrenzungen befindliche Portal.
Fig. 3 zeigt die erfindungsgemäße Dachkonstruktion von schräg oben.
Fig. 4 zeigt eine Detailansicht der Montage der Streben an der Dachfläche.

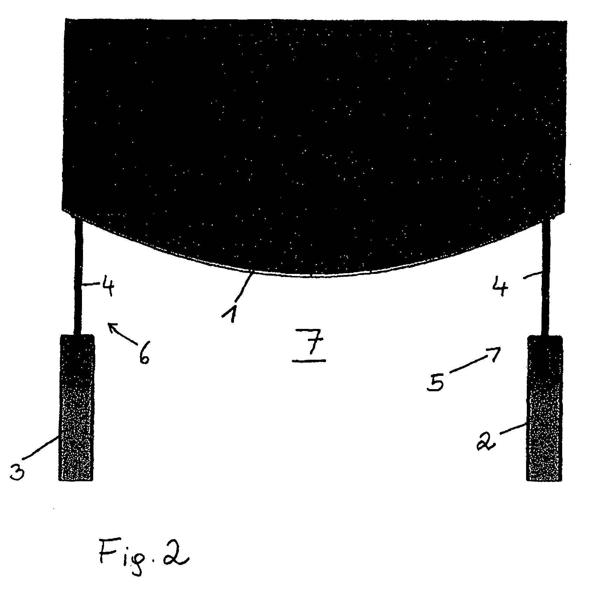

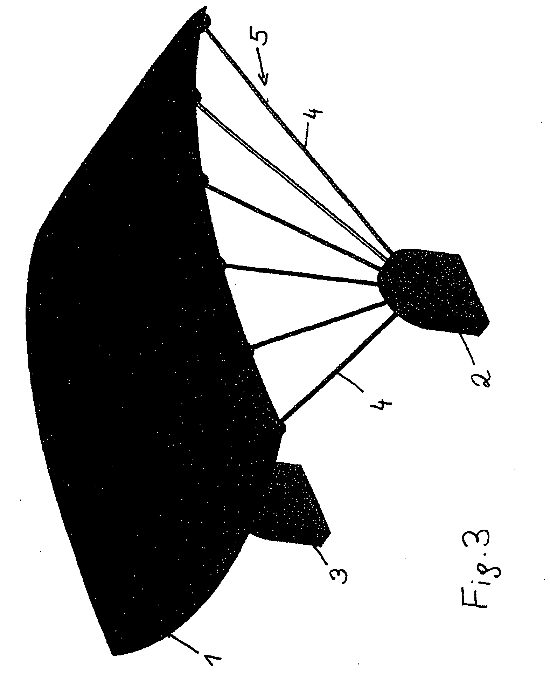

Die Dachkonstruktion umfasst zwei Grundkörper 2, 3, eine Anzahl von Streben 4 sowie eine Dachfläche 1. Wie in Fig. 3 dargestellt, haben die beiden Grundkörper 2, 3 einen vorgegebenen Abstand voneinander. Die Streben 4 sind an jeweils einem der Grundkörper 2, 3 befestigt und bilden mit diesem gemeinsam eine seitliche Abgrenzung 5, 6, welche die Dachkonstruktion seitlich begrenzt. Die Anzahl der Streben 4, die an jeweils einem Grundkörper 2, 3 angeordnet sind kann variieren. Zumeist werden zwischen drei und zehn Streben 4 verwendet, doch können bei größeren Dachkonstruktionen auch mehr Streben 4 pro Grundkörper 2, 3 sowie für die seitliche Abgrenzung 5, 6 verwendet werden. Durch die seitlichen Abgrenzungen 5, 6 und die Dachfläche 1 wird ein überdachter Raum begrenzt, in den beispielsweise ein Fahrzeug, insbesondere ein Kraftfahrzeug, eingestellt werden kann. Zumindest auf einer Seite ist hierfür ein Portal 7 (Fig. 2) vorgesehen, das von den beiden seitlichen Abgrenzungen 5, 6 und von der Dachfläche 1 berandet ist und das Einstellen von Gegenständen, insbesondere das Einstellen eines Kraftfahrzeugs, ermöglicht. Die dem Portal 7 gegenüberliegende Seite der Dachkonstruktion kann entweder durch die Dachfläche 1 vollständig verdeckt sein oder aber, wie im vorliegenden Ausführungsbeispiel dargestellt, so weit verdeckt sein, dass von dieser Seite her das Einstellen Kraftfahrzeugs nicht möglich ist. Es wird hierdurch die typische Funktionalität eines überdachten KFZ-Einstellplatzes (car-port) oder einer Garage erfüllt.

Alternativ kann auch eine Durchfahrt bzw. eine zweiseitig befahrbare Dachkonstruktion vorgesehen sein, die eine symmetrisch aufgebaute Dachfläche 1 aufweist, sodass an der dem Portal 7 gegenüberliegenden Seite ein weiteres Portal ausgebildet ist.

Die Grundkörper 2, 3 sind auf dem zu überdachenden Untergrund befestigt. Vorteilhafterweise befinden sich die beiden Grundkörper 2, 3 auf einem gemeinsamen Fundament oder auf zwei getrennten Fundamenten und sind fest mit dem Erdreich verbunden, um der Dachkonstruktion Stabilität zu verleihen. Die Grundkörper 2, 3 sind in diesem Ausführungsbeispiel aus Kohlefaserkunststoff, wesentlich ist jedoch lediglich, dass die Grundkörper 2, 3 in sich stabil sind und eine Ableitung der auf die Dachfläche 1 einwirkenden Kräfte auf das Fundament ermöglichen. Somit ist grundsätzlich eine Vielzahl von verwindungssteifen Werkstoffen für die Ausbildung der Grundkörper 2, 3 geeignet. Insbesondere ist es nicht erforderlich, dass die Grundkörper 2, 3 leichtgewichtig sind.

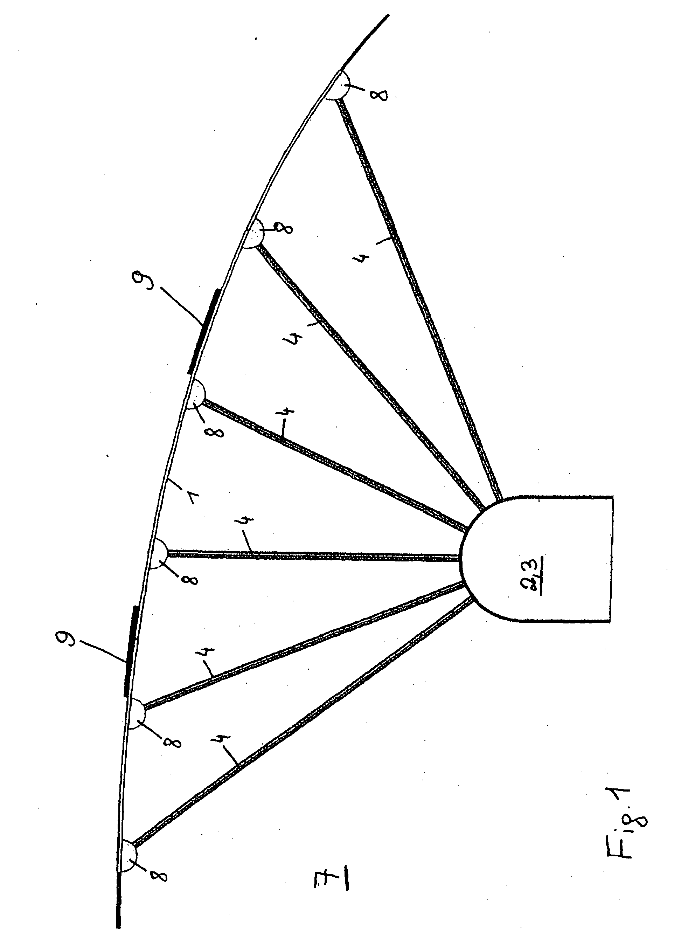

Beide Grundkörper 2, 3 tragen jeweils eine Anzahl von geradlinig ausgebildeten Streben 4, die von einem im jeweiligen Grundkörper 2, 3 gelegenen Zentralpunkt aus zur Dachfläche 1 führen. Die Streben 4 sind in eine Anzahl von Ausnehmungen im Grundkörper 2, 3 eingebracht, wobei der Innenquerschnitt der Ausnehmungen dem Außenquerschnitt der Streben 4 entspricht. Der Bereich des Grundkörpers 2, 3, an dem die Streben 4 angreifen, hat die Oberflächenform eines Zylindermantels. Die Streben 4 können unterschiedliche oder gleiche Längen aufweisen. Durch die Länge der Streben 4 wird die endgültige Form der Dachfläche 1 festgelegt. Die Länge der Streben 4 wird an die jeweils vorgegebene geplante Form der Dachfläche 1 angepasst. Wie aus Fig. 1 ersichtlich, ist die Krümmung der Dachfläche 1 durch die Längen der Streben 4 im Wesentlichen bestimmt. Die Dachfläche 1 selbst enthält relativ steifes und leichtes Material, beispielsweise Faserverbundwerkstoffe. Sie wird alleine durch die Streben 4 in ihrer Position gehalten. Als Streben 4 können vorteilhafterweise Rohre aus faserverstärktem Kunststoff verwendet werden. Diese sind leicht und gleichzeitig verwindungssteif; zusätzlich besteht die Möglichkeit, in ihrem Inneren Leitungen für Strom, Wasser, Gas usw. zu führen.

Die Streben 4 stehen vom Grundkörper 2, 3 speichenförmig ab. Dabei ist es besonders vorteilhaft, jedoch nicht zwingend, dass sich die Verlängerungen der Streben 4 in einem gemeinsamen, eventuell im Grundkörper 2, 3 befindlichen, Zentralpunkt treffen. Die Streben 4 leiten die auf die Dachfläche 1 einwirkenden Kräfte auf den Grundkörper 2, 3 ab.

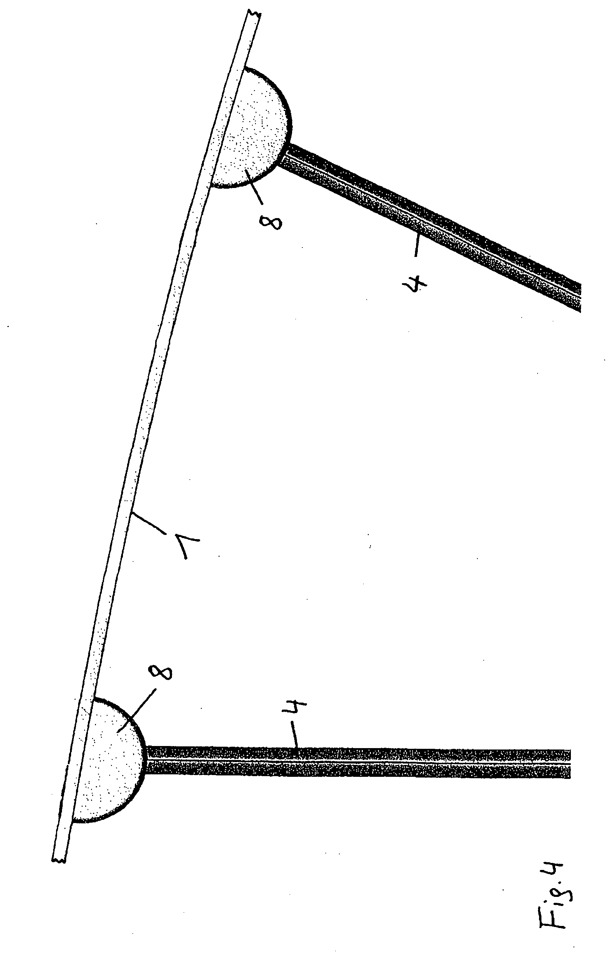

Die Dachfläche 1 umfasst eine Schicht aus Faserverbundwerkstoff. Die Befestigung der Dachfläche 1 an den Streben 4 erfolgt vorteilhafterweise über Verbindungselemente 8. Diese weisen eine Öffnung zur Aufnahme der Streben 4 auf. Die Streben 4 werden in die Aufnahmeöffnungen der Verbindungselemente 8 eingeführt und anschließend, mit den Verbindungselementen 8, detailliert dargestellt in Fig. 4, verschraubt oder auf andere bekannte Weise mit diesen befestigt, beispielsweise verklebt, verschweißt, vernietet usw. Die Verbindungselemente 8 sind weiters mit der Dachfläche 1 verbunden. Die Dachfläche 1 weist an den betreffenden Stellen eine Anzahl von Löchern auf, durch die Schrauben durch die Dachfläche 1 in die Verbindungselemente 8 eingeschraubt werden können. Es besteht selbstverständlich eine große Anzahl von bekannten alternativen Befestigungsmöglichkeiten, beispielsweise durch Nieten, Schweißen, Kleben usw.

Die Verbindungselemente 8 haben die Form eines Zylinders mit halbkreisförmiger Grundfläche bzw. halbkreisförmigem Querschnitt. Der Mantel der Verbindungselemente 8 umfasst einen ebenen und einen gekrümmten Oberflächenabschnitt. Die Verbindungselemente 8 liegen mit ihren ebenen Oberflächenabschnitten an der Dachfläche 1 an. Ihre kreiszylinderförmigen Oberflächenabschnitte sind der Dachfläche 1 abgewandt und tragen eine Ausnehmung zur Aufnahme einer Strebe 4. Die Verbindung der Strebe 4 mit dem Verbindungselement 8 kann auf dieselbe Weise bewerkstelligt werden wie die Verbindung der Strebe 4 mit dem jeweiligen Grundkörper 2, 3.

Bei der dargestellten Ausführungsform (Fig. 1) sind die beiden seitlichen Abgrenzungen 5, 6 identisch aufgebaut. Die Streben 4 gehen jeweils von einem Zentralpunkt der Grundkörper 2, 3 aus und enden in den mit der Dachfläche 1 verbundenen Verbindungselementen 8. Die Streben 4 jeweils einer der seitlichen Abgrenzungen 5, 6 sind jeweils in einer Ebene angeordnet. Die beiden von den Streben 4 aufgespannten Ebenen der beiden seitlichen Abgrenzungen 5, 6 stehen parallel zueinander. Die gesamte Dachkonstruktion ist in diesem speziellen Ausführungsbeispiel symmetrisch um eine zu den beiden Ebenen parallelen, zentral bzw. mittig zwischen den beiden Ebenen verlaufenden Zentralebene.

Die Dachfläche 1 weist zwei parallel verlaufende sie berandende Seiten kanten auf. An diesen Seitenkanten sind die Verbindungselemente 8 angeordnet, an denen die in einer Ebene liegenden Streben 4 angreifen. Gegebenenfalls kann die Dachfläche 1 auch um einen vorgegebenen Abstand über die Verbindungselemente 8 überstehen, um einen besseren Witterungsschutz zu gewährleisten. Bei einer solchen Konfiguration der Dachkonstruktion ist die Dachfläche 1 lediglich nach einer Richtung parallel zur Zentralebene gekrümmt. In der normal zur Zentralebene verlaufenden Richtung ist die Dachfläche 1 nicht gekrümmt.

Die Dachfläche 1 ist, wie bereits erwähnt, von zwei parallelen Seitenkanten begrenzt. Die übrigen Begrenzungen der Dachfläche 1 können beliebig ausgestaltet sein. Um eine besonders windsichere Ausgestaltung der Dachfläche 1 zu erreichen, wird die Dachfläche 1 an den übrigen beiden Seiten jeweils von einer konvex gekrümmten Seitenkante begrenzt, welche die beiden parallelen Seitenkanten jeweils miteinander verbinden.

Die erfindungsgemäße Äusführungsform weist weiters die Besonderheit auf, dass auf der Dachfläche 1 eine Anzahl von Solarkollektoren 9 zur Energiegewinnung angeordnet ist. Als Solarkollektoren 9 können sowohl Kollektoren zur Erzeugung von elektrischer Energie als auch Solarkollektoren zur Erzeugung von thermischer Energie eingesetzt werden. Die Abfuhr der gewonnenen Energie erfolgt vorteilhafterweise über die Streben 4, die als fluiddichte Rohre ausgebildet sind.

Wird durch die Solarkollektoren 9 elektrische Energie erzeugt, verlaufen im Inneren der rohrförmigen Streben 4 Kabelleitungen zum Stromtransport. In den Verbindungselementen 8 sind Transformatoren oder Wechselrichter angeordnet, die die mit den Solarkollektoren 9 gewonnene Energie in eine leichter transportable bzw. in ein Stromnetz einspeisbare Form transformieren.

Zudem kann vorgesehen sein, dass die Streben 4 auch als Zuleitung für eine unterhalb der Dachfläche 1 angeordnete, nicht dargestellte, Beleuchtung verwendet werden. Dabei kann im Grundkörper 2, 3 oder auf den Streben 4 ein Lichtschalter vorgesehen sein, der die Energiezufuhr an die Beleuchtungseinheit steuert.

Wird mit den Solarkollektoren 9 thermische Energie erzeugt, kann vorgesehen sein, dass das zur Übertragung der thermischen Energie verwendete Wärmeträger-Fluid im Innern der rohrförmig ausgebildeten Streben 4 verläuft.

Die Solarkollektoren 9 sind an eine Zuleitung und eine Ableitung angeschlossen, die das Wärmeträger-Fluid einem Wärmetauscher zuführt, der beispielsweise zur Erwärmung von Wasser verwendet wird. Als Wärmeträger-Fluid können unterschiedliche Flüssigkeiten mit hoher spezifischer Wärme eingesetzt werden. Die auf der Dachfläche 1 befindlichen Solarkollektoren 9 sind an die Zuleitung und an die Ableitung angeschlossen. In der beschriebenen bevorzugten Ausführungsform der Erfindung sind sowohl die Zuleitung als auch die Ableitung teilweise durch je eine der Streben 4 gebildet. Die Zuleitung bzw. die Ableitung verläuft in einer der Streben 4 teilweise. Dabei sind die Streben 4 rohrförmig und fluiddicht ausgebildet.

Als Materialien für die Streben 4 sowie die Dachfläche 1 kommen prinzipiell leichte und verwindungssteife Stoffe wie faserverstärkte Kunststoffe infrage. Auch die Grundkörper 2, 3 können Materialien mit diesen Eigenschaften enthalten.

## Patentansprüche

1. Dachkonstruktion zum Unterstellen und Schutz von Fahrzeugen, Gegenständen vor Witterungseinflüssen wie Regen oder Schnee, umfassend eine Dachfläche (1) und zwei mit dem zu überdachenden Untergrund verbindbare Grundkörper (2, 3),
wobei jeder der beiden Grundkörper (2, 3) über jeweils einer Anzahl von Streben (4) mit der Dachfläche (1) verbunden ist,
wobei die Anzahl der mit jeweils einem der Grundkörper (2, 3) verbundenen Streben (4) gemeinsam mit dem jeweiligen Grundkörper (2, 3) jeweils eine seitliche Abgrenzung (5, 6) der Dachkonstruktion bildet,
wobei zwischen den beiden seitlichen Abgrenzungen (5, 6) ein Portal (7) zum Einstellen eines Fahrzeugs ausgebildet ist,
wobei die Streben (4) vom jeweiligen Grundkörper (2, 3) speichenförmig zur Dachfläche (1) radial nach außen verlaufend angeordnet sind,
wobei die Dachfläche (1) einen durch die Anordnung der Enden der Streben (4) vorgegebenen gekrümmten konvexen Verlauf aufweist,
wobei zur Verbindung der Streben (4) mit der Dachfläche (1) Verbindungselemente (8) vorgesehen sind,
**dadurch gekennzeichnet, dass** die Verbindungselemente (8) die Form eines Zylinders mit halbkreisförmigem Querschnitt aufweisen, dessen ebener Mantelabschnitt an der Dachfläche (1) anliegt, gegebenenfalls an den gekrümmten Verlauf der Dachfläche (1) angepasst ist, und die Streben (4) an dessen kreiszylinderförmigen Oberflächenabschnitt angreifen.

2. Dachkonstruktion nach Anspruch 1, **dadurch gekennzeichnet, dass** die beiden seitlichen Abgrenzungen (5, 6) identisch aufgebaut sind.

3. Dachkonstruktion nach Anspruch 1 oder 2, **dadurch gekennzeichnet,**
**dass** die Dachfläche (1) zwei, insbesondere parallel verlaufende, Seitenkanten aufweist und
**dass** die von jeweils einem der Grundkörpern (2, 3) ausgehenden Streben (4) jeweils im gleichen Abstand zur jeweiligen der Seitenkanten der Dachfläche (1) oder direkt an der Seitenkante der Dachfläche (1) angreifen.

4. Dachkonstruktion nach einem der vorangehenden Ansprüche, **dadurch gekennzeichnet, dass** die Streben (4) der beiden seitlichen Abgrenzungen (5, 6) in jeweils einer Ebene liegen.

5. Dachkonstruktion nach einem der vorangehenden Ansprüche, **dadurch gekennzeichnet, dass** die Streben (4) geradlinig ausgebildet sind und insbesondere einen kreisförmigen Außenquerschnitt aufweisen und/oder rohrförmig ausgebildet sind.

6. Dachkonstruktion nach einem der vorangehenden Ansprüche, **dadurch gekennzeichnet, dass** die Streben (4) von einem Zentralpunkt aus radial nach außen verlaufen.

7. Dachkonstruktion nach Anspruch 6, **dadurch gekennzeichnet, dass** die durch die Streben (4) der seitlichen Abgrenzungen (5, 6) aufgespannten Ebenen zueinander parallel liegen.

8. Dachkonstruktion nach einem der vorangehenden Ansprüche, **dadurch gekennzeichnet, dass** die Dachfläche (1) zumindest abschnittsweise einen zylindrischen Oberflächenverlauf aufweist.

9. Dachkonstruktion nach einem der vorangehenden Ansprüche, **dadurch gekennzeichnet, dass** die Dachfläche (1) konvex nach oben gekrümmt ist.

10. Dachkonstruktion nach einem der vorangehenden Ansprüche, **dadurch gekennzeichnet, dass** an der den Streben (4) abgewandten Oberseite der Dachfläche (1) eine Anzahl von Solarkollektoren (9) zur Umwandlung von Sonnenenergie in thermische und/oder elektrische Energie angeordnet ist.

11. Dachkonstruktion nach Anspruch 10, **dadurch gekennzeichnet, dass** in den Streben (4) verlaufende Kabel zur Abfuhr der mit den Solarkollektoren (9) erzeugten elektrischen Energie vorgesehen sind.

12. Dachkonstruktion nach Anspruch 11, **dadurch gekennzeichnet, dass** in zumindest einem der Verbindungselemente (8) ein Wandler vorgesehen ist, der die mit den Solarkollektoren (9) erzeugte elektrische Energie transformiert, insbesondere Wechselstrom an seinen Ausgang abgibt.

13. Dachkonstruktion nach Anspruch 10, **dadurch gekennzeichnet, dass** die Solarkollektoren (9) von zur Übertragung von thermischer Energie auf ein Wärmeträger-Fluid ausgebildet sind, und
dass eine Zuleitung und eine Ableitung vorgesehen sind, über die jeweils Wärmeträger-Fluid in die Solarkollektoren (9) bringbar ist.

14. Dachkonstruktion nach Anspruch 13, **dadurch gekennzeichnet, dass** die Zuleitung und die Ableitung teilweise durch je eine der Streben (4) gebildet sind, wobei die jeweiligen Streben (4) rohrförmig und fluiddicht ausgebildet sind.

15. Dachkonstruktion nach einem der vorangehenden Ansprüche, **dadurch gekennzeichnet, dass** die Streben (4) und/oder die Dachfläche (1) teilweise glasfaserverstärkten Kunststoff aufweisen, insbesondere vollständig aus glasfaserverstärktem Kunststoff bestehen.

## Claims

1. A roof construction for sheltering and protecting vehicles and objects from weather influences such as rain or snow, comprising a roof surface (1) and two base bodies (2, 3), which can be connected to the ground, which is to be roofed over,
wherein each of the two base bodies (2, 3) is connected to the roof surface (1) via a number of struts (4),
wherein the number of struts (4) connected to each one of the base bodies (2, 3) forms, together with the respective base body (2, 3), a respective lateral boundary (5, 6) of the roof construction,
wherein a gantry (7) for garaging a vehicle is formed between the two lateral boundaries (5, 6),
wherein the struts (4) are arranged so as to extend radially outwardly in the manner of spokes from the respective base body (2, 3) to the roof surface (1),
wherein the roof surface (1) has a curved convex course which is predetermined by the arrangement of the ends of the struts (4),
wherein connecting elements (8) are provided for connecting the struts (4) to the roof surface (1),
**characterized in that**
the connecting elements (8) have the form of a cylinder with semi-circular cross-section, the flat shell section of which abuts against the roof surface (1), if necessary, is adjusted to the curved convex course of the roof surface (1), and the struts (4) engage in its circular-cylindrical surface section.

2. A roof construction according to claim 1, **characterized in that** the two lateral boundaries (5, 6) are identically designed.

3. A roof construction according to claim 1 or 2, **characterized in that** the roof surface (1) has two side edges, in particular running in parallel and
that the struts (4) proceeding in each case from one of the base bodies (2, 3) engages in each case at the same distance to the respective side edges of the roof surface (1) or directly to the side edge of the roof surface (1).

4. A roof construction according to one of the preceding claims, **characterized in that** the struts (4) of the two lateral boundaries (5, 6) are in each case in one plane.

5. A roof construction according to one of the preceding claims, **characterized in that** the struts (4) are designed linearly and in particular have a circular outer cross-section and/or are designed in a tubular form.

6. A roof construction according to one of the preceding claims, **characterized in that** the struts (4) extend from a central point radially outwardly.

7. A roof construction according to claim 6, **characterized in that** the planes spanned through the struts (4) of the lateral boundaries (5, 6) are parallel to each other.

8. A roof construction according to one of the preceding claims, **characterized in that** the roof surface (1) has a cylindrical surface course at least in sections.

9. A roof construction according to one of the preceding claims, **characterized in that** the roof surface (1) is curved convexly upward.

10. A roof construction according to one of the preceding claims, **characterized in that** on the upper side of the roof surface (1) turned away from the struts (4) a number of solar collectors (9) is arranged for converting solar energy into thermal and/or electrical energy.

11. A roof construction according to claim 10, **characterized in that** cables running into the struts (4) are provided for removal of the electrical energy generated with the solar collectors (9).

12. A roof construction according to claim 11, **characterized in that** in at least one of the connection elements (8) a transformer is provided which transforms the electrical energy generated with the solar collectors (9), in particular delivers alternating current to its output.

13. A roof construction according to claim 10, **characterized in that** the solar collectors (9) are designed for the transfer of thermal energy to a heat-carrier fluid and that a supply line and an outgoing line are provided, via which in each case the heat-carrier fluid can be brought to the solar collectors (9).

14. A roof construction according to claim 13, **characterized in that** the supply line and the outgoing line are partially formed by each of the struts (4), wherein the respective struts (4) are designed in a tubular form and fluid-tight.

15. A roof construction according to one of the preceding claims, **characterized in that** the struts (4) and/or the roof surface (1) have partially glass fiber-reinforced plastic, in particular consist completely of glass-fiber reinforced plastic.

## Revendications

1. Structure de toit destinée à abriter et protéger des véhicules, des objets, des intempéries telles que la pluie ou la neige, comprenant une surface de toit (1) et deux corps de base (2, 3) pouvant être raccordés au sol à couvrir,
chacun des deux corps de base (2, 3) étant raccordé à la surface de toit (1) par le biais de respectivement une pluralité de tiges de support (4),
la pluralité de tiges de support (4) raccordées respectivement à un des corps de base (2, 3) formant conjointement avec le corps de base (2, 3) respectif respectivement une délimitation latérale (5, 6) de la structure de toit,
un portail (7) étant constitué entre les deux délimitations latérales (5, 6) pour garer un véhicule,
les tiges de support (4) s'étendant radialement vers l'extérieur à la manière de rayons à partir du corps de base (2, 3) respectif vers la surface de toit (1),
la surface de toit (1) présentant un tracé à courbure convexe prédéfini par l'agencement des extrémités des tiges de support (4),
des éléments de raccordement (8) étant prévus pour le raccordement des tiges de support (4) à la surface de toit (1),
**caractérisée en ce que**
les éléments de raccordement (8) présentent la forme d'un cylindre avec une section transversale semi-circulaire dont le tronçon d'enveloppe plan est adjacent à la surface de toit (1), est éventuellement adapté au tracé courbe de la surface de toit (1), et les tiges de support (4) sont appliquées sur son tronçon superficiel en forme de cylindre circulaire.

2. Structure de toit selon la revendication 1, **caractérisée en ce que** les deux délimitations latérales (5, 6) sont de construction identique.

3. Structure de toit selon la revendication 1 ou 2, **caractérisée en ce que** la surface de toit (1) présente deux arêtes latérales, en particulier disposées parallèlement, et **en ce que** les tiges de support (4) sortant respectivement d'un des corps de base (2, 3) sont appliquées respectivement à la même distance de chacune des arêtes latérales de la surface de toit (1) ou directement sur l'arête latérale de la surface de toit (1).

4. Structure de toit selon l'une des revendications précédentes, **caractérisée en ce que** les tiges de support (4) des deux délimitations latérales (5, 6) sont situées respectivement dans un plan.

5. Structure de toit selon l'une des revendications précédentes, **caractérisée en ce que** les tiges de support (4) sont constituées de façon rectiligne et présentent en particulier une section transversale extérieure circulaire et/ou sont constituées sous forme tubulaire.

6. Structure de toit selon l'une des revendications précédentes, **caractérisée en ce que** les tiges de support (4) s'étendent radialement vers l'extérieur à partir d'un point central.

7. Structure de toit selon la revendication 6, **caractérisée en ce que** les plans définis par les tiges de support (4) des délimitations latérales (5, 6) sont parallèles entre eux.

8. Structure de toit selon l'une des revendications précédentes, **caractérisée en ce que** la surface de toit (1) présente au moins par tronçons un tracé superficiel cylindrique.

9. Structure de toit selon l'une des revendications précédentes, **caractérisée en ce que** la surface de toit (1) est courbée de façon convexe vers le haut.

10. Structure de toit selon l'une des revendications précédentes, **caractérisée en ce que**, sur le côté supérieur de la surface de toit (1) éloigné des tiges de support (4), il est disposé une pluralité de capteurs solaires (9) destinés à convertir l'énergie solaire en énergie thermique et/ou électrique.

11. Structure de toit selon la revendication 10, **caractérisée en ce que** des câbles courant dans les tiges de support (4) sont prévus pour l'évacuation de l'énergie électrique produite avec les capteurs solaires (9).

12. Structure de toit selon la revendication 11, **caractérisée en ce que**, dans au moins un des éléments de raccordement (8), il est prévu un transformateur qui transforme l'énergie électrique produite avec les capteurs solaires (9), en particulier délivre un courant alternatif à sa sortie.

13. Structure de toit selon la revendication 10, **caractérisée en ce que** les capteurs solaires (9) sont constitués pour transférer l'énergie thermique vers un fluide caloporteur, et **en ce qu'**il est prévu une conduite d'amenée et une conduite d'évacuation par le biais desquelles du fluide caloporteur peut être respectivement acheminé dans les capteurs solaires (9).

14. Structure de toit selon la revendication 13, **caractérisée en ce que** la conduite d'amenée et la conduite d'évacuation sont formées partiellement par respectivement une des tiges de support (4), les tiges de support (4) respectives étant constituées sous forme tubulaire et de façon étanche aux fluides.

15. Structure de toit selon l'une des revendications précédentes, **caractérisée en ce que** les tiges de support (4) et/ou la surface de toit (1) présentent en partie de la matière plastique renforcée de fibres de verre, en particulier sont entièrement composées de matière plastique renforcée de fibres de verre.
